# EUROPÄISCHE PATENTSCHRIFT

(11) **EP 1 880 116 B1**
(45) Veröffentlichungstag und Bekanntmachung des Hinweises auf die Patenterteilung: **25.02.2009**
(21) Anmeldenummer: 06724377.4
(22) Anmeldetag: 18.04.2006
(51) Int. Cl.: F16D 48/02

(54) **ANTRIEBSSTRANG EINES KRAFTFAHRZEUGS**
MOTOR VEHICLE DRIVING TRAIN
TRANSMISSION D'UN VEHICULE AUTOMOBILE

(30) Priorität: 10.05.2005 DE 102005021416
(43) Veröffentlichungstag der Anmeldung: 23.01.2008
(73) Patentinhaber: ZF Friedrichshafen AG, 88038 Friedrichshafen (DE)
(72) Erfinder: PETZOLD, Rainer, 88045 Friedrichshafen (DE); STEINBORN, Mario, 88046 Friedrichshafen (DE)
(86) Internationale Anmeldenummer: PCT/EP2006/003508
(87) Internationale Veröffentlichungsnummer: WO 2006/119841

(56) Entgegenhaltungen:
- DE-A1- 2 540 191
- DE-A1- 19 700 935
- US-A1- 2003 221 930
- US-A1- 2004 256 194

## Beschreibung

Die Erfindung betrifft einen Antriebsstrang eines Kraftfahrzeugs, mit einem als Verbrennungsmotor ausgebildeten Antriebsmotor, einem mit einem Achsantrieb in Verbindung stehenden Fahrgetriebe mit veränderlichem Übersetzungsverhältnis, und mit einer im Kraftfluss zwischen dem Antriebsmotor und dem Fahrgetriebe angeordneten automatisierten Motorkupplung, die als eine über eine federgestützte Anpressvorrichtung passiv schließbare Reibungskupplung ausgebildet ist, und deren übertragbares Drehmoment (Kupplungsmoment) mittels eines Kupplungs-Stellantriebs einstellbar ist.

Die Erfindung betrifft des weiteren ein Verfahren zur Steuerung einer automatisierten Motorkupplung, die im Antriebsstrang eines Kraftfahrzeugs im Kraftfluss zwischen einem als Verbrennungsmotor ausgebildeten Antriebsmotor und einem mit einem Achsantrieb in Verbindung stehenden Fahrgetriebe mit veränderlichem Übersetzungsverhältnis angeordnet ist, die als eine passiv schließbare Reibungskupplung ausgebildet ist, die über eine federgestützte Anpressvorrichtung geschlossen wird, und deren übertragbares Drehmoment (Kupplungsmoment) mittels eines Kupplungs-Stellantriebs eingestellt wird.

Motorkupplungen sind als passiv schließbare bzw. als aktiv schließbare Reibungskupplungen bekannt. Eine passiv schließbare Reibungskupplung ist im unbetätigten, d.h. von einer äußeren Stellkraft, die von dem Fahrer aufgebracht oder durch einen Stellantrieb erzeugt werden kann, freien Ruhezustand über eine selbsttätige, zumeist federgestützte Anpressvorrichtung geschlossen, und im betätigten Betriebszustand durch die Beaufschlagung einer mit der Anpressvorrichtung in Wirkverbindung stehenden Ausrückvorrichtung mit einer dosierbaren Stellkraft zumindest teilweise geöffnet. Eine aktiv schließbare Reibungskupplung ist im unbetätigten, also von einer äußeren Stellkraft freien Ruhezustand vollständig geöffnet und im betätigten Betriebszustand durch die Beaufschlagung einer zugeordneten Anpressvorrichtung mit einer dosierbaren Stellkraft zumindest teilweise geschlossen.

Eine mittels eines hydraulischen Stellantriebs automatisiert steuerbare, passiv schließbare Motorkupplung ist beispielsweise in der DE 43 09 901 A1 beschrieben. Die betreffende Motorkupplung ist in an sich bekannter Weise als eine Einscheiben-Trockenkupplung ausgebildet, deren Anpressvorrichtung eine zwischen dem an der Schwungscheibe des Antriebsmotors befestigten Kupplungsdeckel und der getriebeseitigen Druckplatte angeordnete Membranfeder umfasst. Der zugeordnete hydraulische Stellantrieb wird durch einen hydraulischen Nehmerzylinder gebildet, der über eine Hydraulikleitung mit einem hydraulischen Geberzylinder in Verbindung steht. Der Geberzylinder ist Bestandteil eines Stellzylinders einer hydraulischen Steuerung, der über ein Magnet-Proportionalventil oder zwei getaktete Magnet-Schaltventile angesteuert wird.

Die Steuerung des Öffnungsgrades und damit des übertragbaren Drehmomentes der Motorkupplung erfolgt über einen an dem Stellzylinder angeordneten Wegsensor. Es handelt sich somit vorliegend um eine relativ aufwändige Wegsteuerung einer automatisierten Reibungskupplung.

Vorteilhaft ist an dieser Kupplungsbauart, dass die Motorkupplung im Störungsfall, der zumeist mit einem Druckverlust in der hydraulischen Steuerung verbunden ist, geschlossen bleibt oder selbsttätig in den geschlossenen Zustand übergeht. Hierdurch besteht für den Fahrer während einer Fahrt die Möglichkeit, das Fahrzeug zumindest bis zu einem sicheren Abstellplatz oder bis in eine Service-Werkstatt zu fahren.

Nachteilig an dieser Kupplungsbauart ist aber der hohe Bauteilaufwand, speziell für die Anpressvorrichtung und die Ausrückvorrichtung, sowie der hohe steuerungstechnische Aufwand der Kupplungssteuerung, der insbesondere aufgrund der nicht-proportionalen Federkennlinie der Membranfeder erforderlich ist. Hinzu kommt, dass zur Einstellung eines bestimmten Kupplungsmomentes, ausgehend vom unbetätigten Ruhezustand, von dem Stellantrieb zunächst ein Leerweg überbrückt und nachfolgend die Überanpressung abgebaut werden muss, was zu einer deutlichen Verzögerung und zu einem insgesamt schlechten Ansprechverhalten der Kupplungssteuerung führt.

Dagegen ist beispielsweise aus der DE 102 40 679 B4 eine mittels eines hydraulischen Stellantriebs automatisiert steuerbare, aktiv schließbare Kupplung bekannt, die neben einer Verwendung als Lastschaltkupplung oder Lastschaltbremse in einem Planetenrad-Getriebeautomaten auch als Motorkupplung verwendbar ist. Die Kupplung ist in an sich bekannter Weise als eine im Ölbad laufende Lamellenkupplung (Nasskupplung) ausgebildet, deren Anpressvorrichtung aus einem hydraulischen Stellzylinder gebildet ist, dessen Kolben einseitig mit der ersten Lamelle des Lamellenpaketes in Kontakt bringbar ist und dessen Druckraum zwischen dem Gehäuse und dem Kolben eingeschlossen ist.

Durch eine spezielle Federanordnung wird einerseits erreicht, dass der Kolben im unbetätigten Ruhezustand durch eine federgestützte Rückstellkraft in eine von der ersten Lamelle beabstandete Position gedrückt wird, so dass alle Lamellen unbelastet sind und die Lamellenkupplung vollständig geöffnet ist. Andererseits wird durch die Federanordnung bei einer Betätigung des Kolbens eine mit dem Erreichen der ersten Lamelle, d.h. dem Beginn der Drehmomentübertragung, einsetzende starke Erhöhung der federgestützten Rückstellkraft bewirkt, wodurch eine gute Dosierbarkeit des eingestellten Kupplungsmomentes, insbesondere auch eine einfache und kostengünstig realisierbare druckgesteuerte Einstellung des übertragbaren Drehmomentes der Motorkupplung ermöglicht wird.

Ein gravierender Nachteil dieser Kupplungsbauart ist allerdings, dass die Motorkupplung in einem zumeist mit einem Druckverlust in der hydraulischen Steuerung verbundenen Störungsfall leckagebedingt selbsttätig geöffnet wird. Dadurch besteht für den Fahrer während einer Fahrt keine Möglichkeit, das betreffende Kraftfahrzeug zumindest bis zu einem sicheren Abstellplatz oder bis in eine Service-Werkstatt zu fahren, sondern das Kraftfahrzeug bleibt an einer von dem Fahrer nicht bestimmbaren und gegebenenfalls gefährlichen Stelle liegen und muss abgeschleppt werden.

Ebenfalls ist bei dieser Bauart von Nachteil, dass zur Einstellung eines bestimmten Kupplungsmomentes, ausgehend vom unbetätigten Ruhezustand, von dem Stellantrieb zunächst ein Leerweg überbrückt werden muss, was zu einer gewissen Verzögerung im Ansprechverhalten der Kupplungssteuerung führt.

Des Weiteren ist aus der US2003/0221930A1 eine Betätigungseinrichtung für eine schaltbare Kupplung bekannt, umfassend eine Druckversorgungseinrichtung, die über je ein Strömungsventil mit zwei Arbeitsräumen einer doppelt wirkenden Kolben-Zylinderanordnung der Betätigungseinrichtung verbunden ist, wobei jeder Arbeitsraum mit einer Kolbenfläche in Wirkverbindung steht und die Kolbenflächen an mindestens einem Kolben vorliegen, der in den Arbeitsräumen eine Betriebsbewegung und dabei eine Betätigungskraft auf die schaltbare Kupplung ausübt. Die Steuerung des Druckes in den Arbeitsräumen und damit die Steuerbarkeit der Kupplungsstellung sind mit dieser Art der Druckversorgungseinrichtung nicht hinreichend genau zu kontrollieren.

Schließlich ist aus der US2004/256194A1 eine weitere Kupplungseinrichtung für ein Fahrzeug bekannt, welche eine mechanische Federeinrichtung aufweist, die ein Einrücken der Kupplung und eine Übertragung eines Drehmomentes bewirkt. Des Weiteren weist die Kupplungseinrichtung eine doppelt wirkende Zylinder-Kolben-Anordnung mit einer Haupt- und einer Nebenkammer auf, wobei die Zylinder-Kolben-Anordnung bei Druckbeaufschlagung der Hauptkammer in Richtung des Ausrückens der Kupplung und bei einer Druckbeaufschlagung der Nebenkammer in Richtung des Einrückens der Kupplung wirksam wird. Über je ein Wegeventil steht die Haupt- und die Nebenkammer der Zylinder-Kolben-Anordnung mit je einer Druckluftquelle und einer Druckluftsenke in Verbindung. Auch mit dieser Anordnung zur Drucksteuerung in den Arbeitsräumen der Kolben-Zylinder-Anordnung ist die Kupplungsstellung nicht für alle auftretenden Betriebssituationen hinreichend genau zu kontrollieren.

Vor diesem Hintergrund liegt der vorliegenden Erfindung die Aufgabe zugrunde, eine automatisierte Motorkupplung eines Antriebsstrangs der eingangs genannten Art vorzuschlagen, die bei einfachem und kostengünstigem Aufbau eine verbesserte Steuerbarkeit und ein verbessertes Ansprechverhalten aufweist. Des Weiteren soll ein Verfahren zur Steuerung einer derartigen Motorkupplung angegeben werden.

Die Lösung der Aufgabe die Motorkupplung betreffend besteht in einem Gegenstand mit den Merkmalen des Anspruchs 1.

Vorteilhaft Ausgestaltungen und Weiterbildungen der gegenständlichen Erfindung sind in den Unteransprüchen 2 bis 6 angegeben.

Bei der erfindungsgemäßen Motorkupplung, die sowohl als Trockenkupplung wie auch als Nasskupplung ausgebildet sein kann, handelt es sich um eine passiv schließbare Reibungskupplung, die im unbetätigten Betriebszustand, d.h. bei kraftlosem Kupplungs-Stellantrieb, selbsttätig mittels der federgestützten Anpressvorrichtung geschlossen wird bzw. geschlossen gehalten wird. Die federgestützte Anpressvorrichtung ist aber erfindungsgemäß im Gegensatz zu bekannten Motorkupplungen, die auf ein Basis-Kupplungsmoment von etwa 200% des maximalen Drehmoments des Antriebsmotors (Überanpressung) ausgelegt sind, auf ein weit unterhalb des maximalen Drehmoments des Antriebsmotors liegendes Basis-Kupplungsmoment ausgelegt, welches beispielsweise dem Schleppmoment oder dem Leerlaufmoment des Antriebsmotors entsprechen kann. Eine Erhöhung des Kupplungsmomentes erfolgt erfindungsgemäß mittels der zweiten Anpressvorrichtung, wobei das derart eingestellte Kupplungsmoment weitgehend proportional zu der von dem zugeordneten Kupplungs- Stellantrieb erzeugten Stellkraft ist.

Insgesamt führt dies gegenüber den bekannten Kupplungsbauarten zu einer verbesserten Steuerbarkeit, die eine einfache und kostengünstige Steuerungsvorrichtung zur Ansteuerung des Kupplungs-Stellantriebs und einen preiswerten und platzsparenden Aufbau der Motorkupplung ermöglicht. So können die federgestützte Anpressvorrichtung und die durch diese belasteten Kupplungsbauteile aufgrund der niedrigeren Belastung relativ einfach und preiswert ausgeführt sein.

Da die Grundeinstellung der Motorkupplung selbsttätig über die federgestützte Anpressvorrichtung erfolgt, kann die zweite Anpressvorrichtung weitgehend spielfrei ausgebildet werden, was mit einem schnelleren Ansprechverhalten der Kupplungssteuerung verbunden ist. Somit können dann Anfahr- und Rangiervorgänge dynamischer durchgeführt und die Schaltzeiten von Schaltvorgängen bei einem als Schaltgetriebe ausgebildeten Fahrgetriebe verkürzt werden.

Weiter ist durch die federgestützte Anpressvorrichtung sichergestellt, dass die Motorkupplung auch bei einer Störung an dem Kupplungs-Stellantrieb oder der zugeordneten Kupplungssteuerung, wenn auch mit einem relativ geringen übertragbaren Drehmoment, geschlossen bleibt. Daher kann das betreffende Kraftfahrzeug bei einer Störung zumindest mit verminderter Geschwindigkeit bis zum Erreichen eines sicheren Abstellplatzes oder einer Service-Werkstatt weitergefahren werden.

Für eine Absenkung des Kupplungsmomentes unter das Basis-Kupplungsmoment und/oder zum vollständigen Öffnen der Motorkupplung ist zweckmäßig eine über einen steuerbaren Stellantrieb betätigbare Ausrückvorrichtung vorgesehen, deren Betätigung vorteilhaft mit derjenigen der zweiten Anpressvorrichtung in einem gemeinsamen Kupplungs-Stellantrieb zusammengefasst ist.

Der Kupplungs-Stellantrieb der zweiten Anpressvorrichtung und/oder der Ausrückvorrichtung kann prinzipiell druckmittelbetätigt, d.h. pneumatisch oder hydraulisch wirksam, ausgebildet sein. So kann dieser Kupplungs-Stellantrieb als ein druckmittelbetätigter Stellzylinder ausgebildet sein, der über eine Anschlussleitung und eine Kupplungs-Steuereinrichtung an eine Druckmittelquelle angeschlossen ist.

Beispielsweise kann der Kupplungs-Stellantrieb bei einer pneumatischen Ausbildung zweckmäßig an eine vorhandene Druckluft-Versorgungseinrichtung des Kraftfahrzeugs angeschlossen sein. Ebenso ist es auch möglich, dass der Kupplungs-Stellantrieb bei einer hydraulischen Ausbildung an eine vorhandene Hydraulik-Druckversorgungseinrichtung des Kraftfahrzeugs, z.B. einer hydraulischen Schalt- oder Übersetzungssteuerung des Fahrgetriebes, angeschlossen ist.

Bei einer druckmittelbetätigten Ausführung des gemeinsamen Kupplungs-Stellantriebs umfasst dieser einen doppeltwirksamen Stellzylinder, einen axialbeweglich in dem Stellzylinder gelagerten Stellkolben und zwei beidseitig des Stellkolbens jeweils von dem Stellzylinder und dem Stellkolben eingeschlossene Druckräume, wobei der erste Druckraum getriebeseitig an den Stellkolben angrenzt und über eine erste Anschlussleitung über eine Kupplungs-Steuereinrichtung mit der Druckmittelquelle verbunden ist, wobei der zweite Druckraum kupplungsseitig an den Stellkolben angrenzt und über eine zweite Anschlussleitung über eine Kupplungs-Steuereinrichtung mit der Druckmittelquelle verbunden ist, und wobei der Stellzylinder oder der Stellkolben mit einem Abstützelement der Motorkupplung und das jeweils andere Bauteil (Stellkolben oder Stellzylinder) mit einem Anpresselement der Motorkupplung in Verbindung steht.

Bei einer Ausbildung der Motorkupplung als eine Einscheiben- oder Mehrscheiben-Trockenkupplung mit einem an der Schwungscheibe des Antriebsmotors befestigten Kupplungsdeckel und einer getriebeseitigen Druckplatte wird der Stellzylinder vorteilhaft durch eine ringtopfförmige Ausformung des Kupplungsdeckels gebildet, und ein entsprechend ringförmig ausgebildeter Stellkolben steht mit der Druckplatte in Verbindung, wodurch ein insgesamt einfach und kostengünstig herstellbarer und wenig Bauraum beanspruchender Aufbau der Motorkupplung gegeben ist.

Zur Ansteuerung des gemeinsamen Kupplungs-Stellantriebes umfasst die von einer elektronischen Steuerungsvorrichtung gesteuerte Kupplungs-Steuereinrichtung eine Ventilkombination aus zwei 2/2-Wegeventilen, einem Umschaltventil und einem Drucksensor. Mit einem ersten 2/2-Wegeventil kann eine Druckraumverbindung zur Druckmittelquelle geöffnet oder geschlossen werden. Das zweite 2/2-Wegeventil dient dagegen dazu, eine Druckraumverbindung zu einer Druckmittelsenke bzw. zu einer Drucklosleitung zu öffnen oder zu schließen. Das genannte Umschaltventil ist drucktechnisch zwischen den beiden 2/2-Wegeventilen und den beiden Druckräumen angeordnet, so dass mit diesem eine Verbindung zu den beiden Druckräumen wechselseitig herstellbar oder absperrbar ist.

Durch diese Ventilkombination ist es daher möglich, über die beiden 2/2-Wegeventile jeweils einen der beiden Druckräume zu befüllen bzw. zu entlüften, sowie den anderen Druckraum in dem vorher durch Ansteuerung erzeugten Druckzustand zu halten.

Mit Hilfe des erwähnten Drucksensors, der vorzugsweise in einer Verbindungsleitung zwischen den beiden 2/2-Wegeventilen und dem Umschaltventil angeordnet ist, kann der Druck in den jeweils frei geschalteten Druckräumen ermittelt und eingeregelt werden. Dadurch ist es möglich, das maximale Kupplungsübertragungsmoment beziehungsweise einen Teilbetrag davon einzustellen, indem die eine Druckkammer entlüftet bzw. die andere Druckkammer belüftet wird. Das Kupplungsübertragungsmoment zwischen diesem Maximaldrehmoment und dem durch die federgestützte Anpressvorrichtung erzeugten Basis-Kupplungsmoment ist dabei proportional zu dem Druck in der belüfteten Druckkammer. Durch Entlüften dieser Druckkammer und Belüften der anderen Druckkammer ist es möglich, ein Kupplungsmoment unterhalb des Basiskupplungsmomentes einzuregeln bzw. die Kupplung komplett zu öffnen. Zudem ist es möglich, durch Verwendung anderer Druckregeleinrichtungen, wie zum Beispiel Proportionalventile oder andere Ventilkombinationen, vergleichbare Kupplungsverhaltensweisen zu erzeugen.

In einer diesbezüglich anderen nicht im Schutzumfang der Erfindung liegende Variante der Kupplungs-Steuereinrichtung kann vorgesehen sein, dass diese zwei Druckregelventile umfasst, die beide eingangsseitig mit der zur Druckmittelquelle führenden Verbindungsleitung verbunden sind, und von denen das erstes Druckregelventil ausgangsseitig mit der zum ersten Druckraum führenden Verbindungsleitung und das zweite Druckregelventil ausgangsseitig mit der zum zweiten Druckraum führenden Verbindungsleitung verbunden ist. Mit dem ersten Druckregelventil wird der Druck im ersten Druckraum und damit das Kupplungsübertragungsmoment zwischen dem Basis-Kupplungsmoment und dem maximalen Kupplungsmoment geregelt. Mit dem zweiten Druckregelventil wird der Druck in dem zweiten Druckraum und damit das Kupplungsübertragungsmoment zwischen dem Basis-Kupplungsmoment und dem vollständigem Öffnen der Kupplung geregelt.

Eine weitere nicht im Schutzumfang der Erfindung liegende Variante der Kupplungs-Steuereinrichtung umfasst vier 2/2-Wegeventile sowie zwei Drucksensoren, wobei je zwei 2/2-Wegeventile jeweils mit der zur Druckmittelquelle führenden Verbindungsleitung verbunden sind und die beiden anderen 2/2-Wegeventile in Verbindung mit der Drucklosleitung stehen. Zudem ist vorgesehen, dass jeweils zwei 2/2-Wegeventile mit der zum zweiten Druckraum führenden Verbindungsleitung sowie die beiden anderen 2/2-Wegeventile mit der zum ersten Druckraum führenden Verbindungsleitung in Verbindung stehen.

Die beiden Drucksensoren sind dabei derartig angeordnet, dass diese den Druck in der Verbindungsleitung zwischen den beiden ersten 2/2-Wegeventilen und dem zweiten Druckraum bzw. in der Verbindungsleitung zwischen den zweiten beiden 2/2-Wegeventilen und dem ersten Druckraum messen können.

Mittels dieses Aufbaus der Kupplungs-Steuereinrichtung kann durch sinnvolles Betätigen einer ersten Gruppe von zwei 2/2-Wegeventilen dieser vier 2/2-Wegeventile mit Hilfe eines Drucksensors der Druck im zweiten Druckraum bestimmt und damit das Kupplungsübertragungsmoment zwischen dem Basis-Kupplungsmoment und dem vollständigen Öffnen der Kupplung geregelt werden. Durch sinnvolles Betätigen der zweiten Gruppe von zwei 2/2-Wegeventilen kann durch den anderen Drucksensor der Druck im ersten Druckraum bestimmt und auf dessen Grundlage das Kupplungsübertragungsmoment zwischen dem Basis-Kupplungsmoment und dem maximalen Kupplungsmoment geregelt werden.

Schließlich kann gemäß der Erfindung vorgesehen sein, dass das durch die federgestützte Anpressvorrichtung erzeugte Basis-Kupplungsmoment dem Schleppmoment des Antriebsmotors oder dem Leerlaufmoment des Antriebsmotors entspricht.

Die erfindungsgemäße Vorrichtung ermöglicht ein Verfahren, bei dem mittels der federgestützten Anpressvorrichtung ein unterhalb des maximalen Drehmoments des Antriebsmotors liegendes Basis-Kupplungsmoment selbsttätig erzeugt wird, und ein höheres Kupplungsmoment mittels einer zusätzlichen zweiten, mit dem Kupplungs-Stellantrieb in Wirkverbindung stehenden Anpressvorrichtung eingestellt wird.

Eine Absenkung des Kupplungsmomentes unter das Basis-Kupplungsmoment und/oder ein vollständiges Öffnen der Motorkupplung erfolgt mittels einer über einen steuerbaren Stellantrieb betätigbaren Ausrückvorrichtung, wobei dieser Stellantrieb mit demjenigen der zweiten Anpressvorrichtung in einem gemeinsamen Kupplungs-Stellantrieb zusammengefasst ist.

Zur Verdeutlichung der Erfindung ist der Beschreibung eine Zeichnung von verschiedenen Ausführungsbeispielen beigefügt. In dieser zeigt schematisch
- Fig. 1: einen Antriebsstrang mit einer erfindungsgemäßen Motorkupplung und einer zugeordneten Kupplungs-Steuereinrichtung,
- Fig. 2: eine erste Variante einer Kupplungs-Steuereinrichtung für den Antriebsstrang gemäß Fig. 1,
- Fig. 3: eine zweite, nicht im Schutzumfang der Erfindung liegende Variante einer Kupplungs-Steuereinrichtung, und
- Fig. 4: eine dritte, nicht im Schutzumfang der Erfindung liegende diesbezügliche Variante.

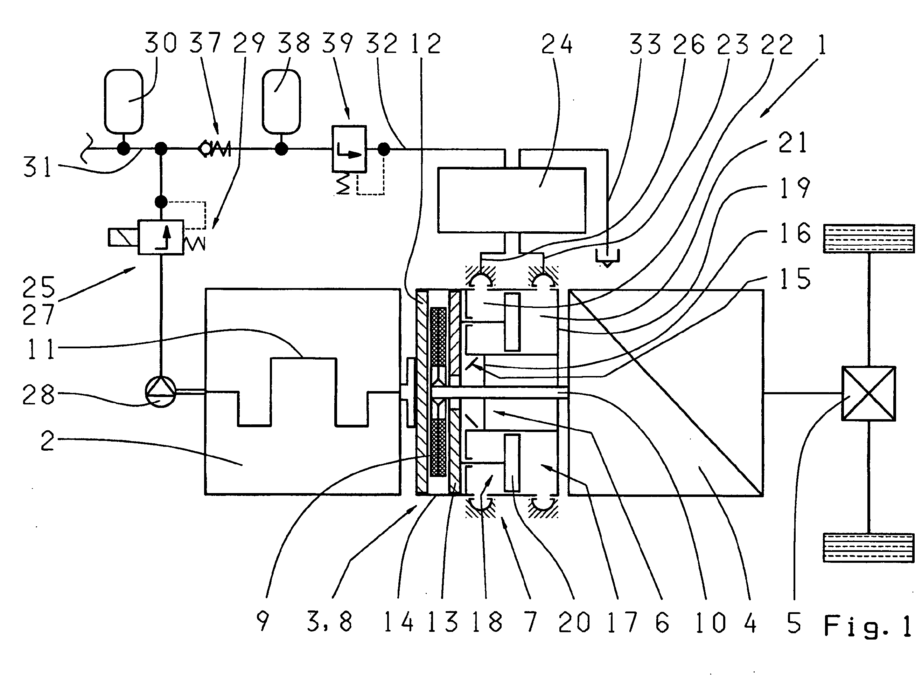

Gemäß Fig. 1 umfasst ein Antriebsstrang 1 eines Kraftfahrzeugs demnach einen als Verbrennungsmotor ausgebildeten Antriebsmotor 2, ein mit einem Achsantrieb 5 in Verbindung stehendes Fahrgetriebe 4 mit veränderlichem, d.h. stufenweise schaltbarem oder kontinuierlich verstellbarem Übersetzungsverhältnis, und eine im Kraftfluss zwischen dem Antriebsmotor 2 und dem Fahrgetriebe 4 angeordnete automatisierte Motorkupplung 3, die vorliegend als eine über eine federgestützte Anpressvorrichtung 6 passiv schließbare Reibungskupplung ausgebildet ist, und deren übertragbares Drehmoment (Kupplungsmoment) mittels eines Kupplungs-Stellantriebs 7 einstellbar ist.

Die Motorkupplung 3 ist vorliegend als eine Einscheiben-Trockenkupplung 8 ausgebildet. Daher ist in an sich bekannter Weise eine Mitnehmerscheibe 9, die drehfest und axial verschiebbar auf der Eingangswelle 10 des Fahrgetriebes 4 gelagert ist, zwischen einer mit der Kurbelwelle 11 des Antriebsmotors 2 fest verbundenen Schwungscheibe 12 und einer getriebeseitigen Druckplatte 13 angeordnet. Die Druckplatte 13 ist drehfest und axial verschiebbar in einem Kupplungsdeckel 14 gelagert, der fest mit der Schwungscheibe 12 verbunden ist. Die federgestützte Anpressvorrichtung 6 ist vorliegend durch eine als Tellerfeder ausgebildete Anpressfeder 15 gebildet, die zwischen der Druck-platte 13 und einem Ringsteg 16 des Kupplungsdeckels 14 wirksam angeordnet ist. Durch die Federkraft der Anpressfeder 15 wird die Druckplatte 13 in Richtung zum Antriebsmotor 2 gedrückt und damit die Mitnehmerscheibe 9 zwischen der Schwungscheibe 12 und der Druckplatte 13 eingeklemmt, wodurch ein Drehmoment reibschlüssig von der Kurbelwelle 11 des Antriebsmotors 2 auf die Eingangswelle 10 des Fahrgetriebes 4 übertragen werden kann.

Allerdings ist die federgestützte Anpressvorrichtung 6 bzw. die Anpressfeder 15 vorliegend erfindungsgemäß auf die Erzeugung eines unterhalb des maximalen Drehmoments des Antriebsmotors 2 liegenden Basis-Kupplungsmomentes ausgelegt. Zur Erhöhung des übertragbaren Drehmoments und zum Öffnen der Motorkupplung 3 dient der Kupplungs-Stellantrieb 7, der vorliegend pneumatisch wirksam ausgebildet ist, und in dem eine zusätzliche zweite Anpressvorrichtung 17 und eine Ausrückvorrichtung 18 kombiniert sind.

Hierzu weist der Kupplungsdeckel 14 getriebeseitig durch eine entsprechende ringtopfförmige Ausformung einen ringförmigen doppeltwirksamen Stellzylinder 19 auf, in dem ein ebenfalls ringförmig ausgebildeter und mit der Druckplatte 13 in Verbindung stehender Stellkolben 20 axial verschiebbar gelagert ist.

Der Stellzylinder 19 und der Stellkolben 20 schließen beidseitig des Stellkolbens 20 jeweils einen ringförmigen Druckraum 21, 22 ein, getriebeseitig einen ersten Druckraum 21, der über eine erste Anschlussleitung 23 und eine Kupplungs-Steuereinrichtung 24 mit einer Druckmittelquelle 25 verbunden ist, und mit dem der Kupplungs-Stellantrieb 7 die zweite Anpressvorrichtung 17 bildet, und motorseitig einen zweiten Druckraum 22, der über eine zweite Anschlussleitung 26 und die Kupplungs-Steuereinrichtung 24 mit der Druckmittelquelle 25 verbunden ist, und mit dem der Kupplungs-Stellantrieb 7 die Ausrückvorrichtung 18 bildet.

Durch den Aufbau eines Wirkdruckes in dem ersten Druckraum 21 wird die als Anpresselement wirksame Druckplatte 13 durch den Stellkolben 20 in Richtung zum Antriebsmotor 2 gedrückt und damit in Wirkrichtung der Anpressfeder 15 ein erhöhtes Kupplungsmoment eingestellt. Durch den Aufbau eines Wirkdruckes in dem zweiten Druckraum 22 wird die Druckplatte 13 durch den Stellkolben 20 in Richtung des Fahrgetriebes 4 gedrückt und damit gegen die Wirkrichtung der Anpressfeder 15 ein verringertes Kupplungsmoment eingestellt oder die Motorkupplung 3 gegebenenfalls vollständig geöffnet.

Als Druckmittelquelle 25 wird eine Druckluft-Versorgungseinrichtung 27 des Kraftfahrzeugs verwendet. Diese besteht aus einem von dem Antriebsmotor angetriebenen Kompressor 28, mittels dem Druckluft über ein steuerbares Druckbegrenzungsventil 29 in eine mit einem Druckspeicher 30 versehene Systemdruckleitung 31 förderbar ist. An die Systemdruckleitung 31 sind nicht abgebildete Verbraucher angeschlossen

Die Kupplungs-Steuereinrichtung 24 ist in Fig. 1 lediglich symbolisch dargestellt. Diese umfasst vorzugsweise elektromagnetisch betätigbare Schaltventile, die von einer nicht dargestellten elektronischen Steuerungsvorrichtung aufgrund von Sensorinformationen und Steuerung- beziehungsweise Regelungsbefehlen zur Kupplungsbetätigung ansteuerbar sind.

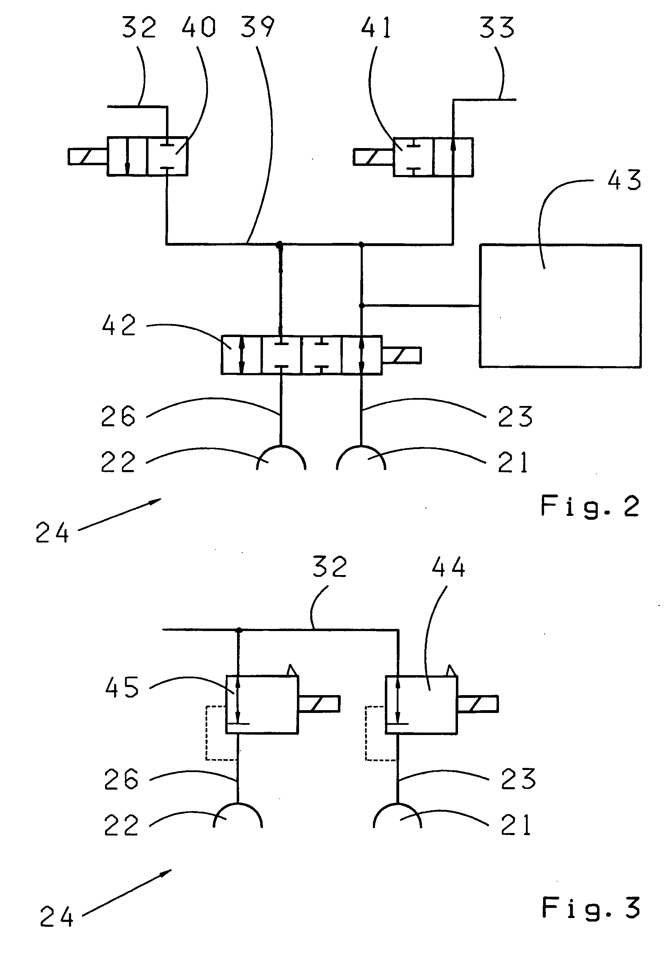

Wie Fig. 2 verdeutlicht, umfasst die Kupplungs-Steuereinrichtung 24 zwei 2/2-Wegeventile 40 und 41 sowie einen Drucksensor 43 und ein Umschaltventil 42, die in der dargestellten Weise über Verbindungsleitungen miteinander verbunden sind. Dabei ist ein erstes 2/2-Wegeventil 40 ausgestattet mit einem Anschluss für eine Verbindungsleitung 32, die zur Druckmittelquelle 25 führt und mit einem Anschluss für eine zu dem Umschaltventil 42 führenden Verbindungsleitung 39. Das zweite 2/2-Wegeventil 41 ist ausgestattet mit einem Anschluss für die Verbindungsleitung 39 zu dem Umschaltventil 42 und einem Anschluss an die Drucklosleitung 33. Das Umschaltventil 42 verfügt dabei über einen Anschluss, mit dem es an die Verbindungsleitung 39 zu den beiden 2/2-Wegeventilen 40, 41 angeschlossen ist. Zudem ist das Umschaltventil 42 mit den beiden Verbindungsleitungen 23 und 26 verbunden, die zu dem ersten Druckraum 21 beziehungsweise zu dem zweiten Druckraum 22 führen.

Schließlich zeigt Fig. 2, dass der Drucksensor 43 so angeordnet ist, dass dieser den Druck in der Verbindungsleitung 39 zwischen den beiden 2/2-Wegeventilen 40, 41 und dem Umschaltventil 42 messen kann. Dessen Messsignale geben demnach den Druck in demjenigen Druckraum 21 oder 22 an, mit dem dieser Drucksensor 43 durch die Schaltstellung des Umschaltventils 42 gerade auf gleichem Druckniveau verbunden ist. Der Drucksensor 43 ist mit der hier nicht dargestellten elektronischen Steuerungsvorrichtung signaltechnisch verbunden, die die Steuerung der Kupplungs-Steuereinrichtung 24 bzw. deren Steuerventile 40, 41, 42 auch aufgrund der Messwerte des Drucksensors 43 vornimmt.

Fig. 3 zeigt eine andere nicht im Schutzumfang der Erfindung liegende Variante der Kupplungs-Steuereinrichtung 24, die im Wesentlichen zwei Druckregelventile 44, 45 umfasst. Diese beiden Druckregelventile 44 und 45 sind beide eingangsseitig mit der zur Druckmittelquelle 25 führenden Verbindungsleitung 32 verbunden. Zudem ist das erste Druckregelventil 44 ausgangsseitig mit der zum ersten Druckraum 21 führenden Verbindungsleitung 23 und das zweite Druckregelventil 45 ausgangsseitig mit der zum zweiten Druckraum 22 führenden Verbindungsleitung 26 verbunden. Bei einer derartigen Kupplungs-Steuereinrichtung 24 kann gegebenenfalls auf das Druckbegrenzungsventil 39 gemäß Fig. 1 kostensenkend verzichtet werden.

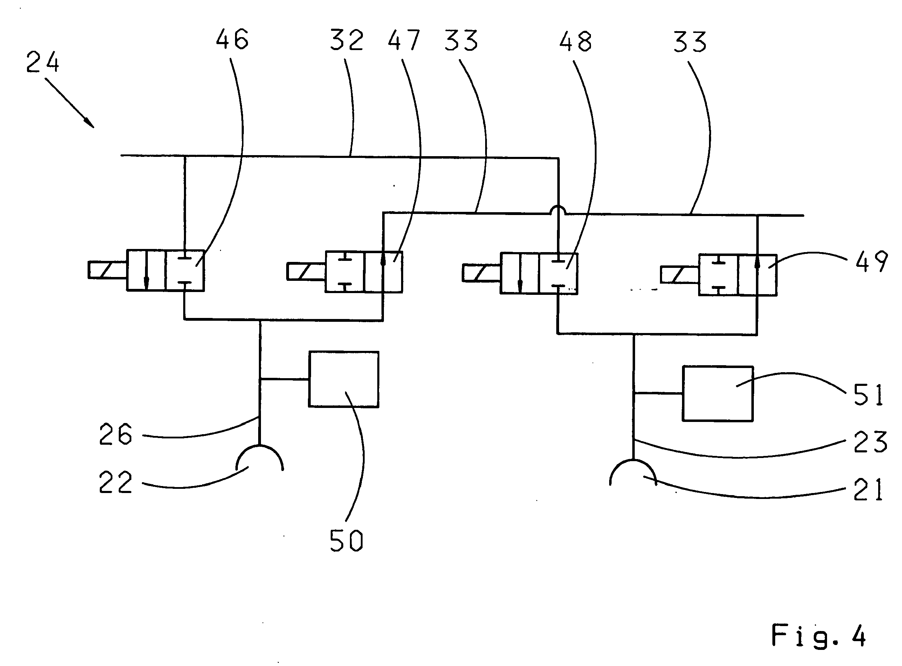

Gemäß einer anderen, in Fig. 4 dargestellten nicht im Schutzumfang der Erfindung liegende Variante der Kupplungs-Steuereinrichtung 24, umfasst diese im Wesentlichen vier 2/2-Wegeventile 46, 47, 48, 49 sowie zwei Drucksensoren 50, 51, wobei je zwei 2/2-Wegeventile 46, 48 eingangsseitig jeweils mit der zur Druckmittelquelle 25 führenden Verbindungsleitung 32 verbunden sind, und die beiden anderen 2/2-Wegeventile 47 und 49 ausgangsseitig in Verbindung mit der Drucklosleitung 33 stehen. Außerdem ist vorgesehen, dass die zwei 2/2-Wegeventile 46 und 47 mit der zum zweiten Druckraum 22 führenden Verbindungsleitung 26 sowie die beiden anderen 2/2-Wegeventile 48 und 49 mit der zum ersten Druckraum 21 führenden Verbindungsleitung 23 verbunden sind.

Mittels dieser Kupplungs-Steuereinrichtung 24 kann durch Betätigen einer ersten Gruppe von zwei 2/2-Wegeventilen 46, 47 der zweite Druckraum 22 belüftet oder entlüftet werden, und mittels des zweiten Drucksensors 50 der Druck im zweiten Druckraum 22 bestimmt sowie damit das Kupplungsübertragüngsmoment zwischen dem Basis-Kupplungsmoment und dem vollständigen Öffnen der Kupplung 3 geregelt werden. Durch sinnvolles Betätigen der zweiten Gruppe von zwei 2/2-Wegeventilen 48, 49 kann der erste Druckraum 21 belüftet oder entlüftet werden, und mittels des ersten Drucksensors 51 der Druck im ersten Druckraum 21 bestimmt sowie auf dessen Grundlage das Kupplungsübertragungsmoment zwischen dem Basis-Kupplungsmoment und dem maximalen Kupplungsmoment eingestellt werden.

Durch die Einstellung von Zwischenpositionen an der Kupplungs-Steuereinrichtung 24 ist der Wirkdruck in den beiden Druckräumen 21, 22 und damit das übertragbare Drehmoment der Motorkupplung 3 stufenlos einstellbar.

Zur Aufrechterhaltung der Kupplungssteuerung bei einem Druckverlust der Druckmittelquelle 25 sind in der Verbindungsleitung 32 ein Rückschlagventil 37 mit Sperrwirkung in Richtung der Druckmittelquelle 25 und ein separater Druckspeicher 38 angeordnet. Des Weiteren ist die Verbindungsleitung 32 zur Begrenzung des Systemdruckes der Kupplungssteuerung mit einem Druckbegrenzungsventil 39 versehen.

Aufgrund einer relativ niedrigen Belastung der Bauteile, einer weitgehend spielfreien Ausbildung und einer möglichen Drucksteuerung weist die erfindungsgemäße Motorkupplung 3 bei einfachem und kostengünstigem Aufbau eine verbesserte Steuerbarkeit und ein schnelleres Ansprechverhalten auf.

### Bezugszeichen

- 1: Antriebsstrang
- 2: Antriebsmotor
- 3: Motorkupplung
- 4: Fahrgetriebe
- 5: Achsantrieb
- 6: Federgestützte Anpressvorrichtung
- 7: Kupplungs-Stellantrieb
- 8: Einscheiben-Trockenkupplung
- 9: Mitnehmerscheibe
- 10: Eingangswelle
- 11: Kurbelwelle
- 12: Schwungscheibe
- 13: Druckplatte, Anpresselement
- 14: Kupplungsdeckel, Abstützelement
- 15: Anpressfeder
- 16: Ringsteg
- 17: Zweite Anpressvorrichtung
- 18: Ausrückvorrichtung
- 19: Stellzylinder
- 20: Stellkolben
- 21: Erster Druckraum
- 22: Zweiter Druckraum
- 23: Erste Anschlussleitung
- 24: Kupplungs-Steuereinrichtung
- 25: Druckmittelquelle
- 26: Zweite Anschlussleitung
- 27: Druckluft-Versorgungseinrichtung
- 28: Kompressor
- 29: Druckbegrenzungsventil
- 30: Druckspeicher
- 31: Systemdruckleitung
- 32: Verbindungsleitung
- 33: Drucklosleitung
- 37: Rückschlagventil
- 38: Druckspeicher
- 39: Druckbegrenzungsventil
- 40: 2/2-Wegeventil
- 41: 2/2-Wegeventil
- 42: Umschaltventil
- 43: Drucksensor
- 44: Erstes Druckregelventil
- 45: Zweites Druckregelventil
- 46: 2/2-Wegeventil
- 47: 2/2-Wegeventil
- 48: 2/2-Wegeventil
- 49: 2/2-Wegeventil
- 50: Drucksensor
- 51: Drucksensor

## Patentansprüche

1. Antriebsstrang eines Kraftfahrzeugs, mit einem als Verbrennungsmotor ausgebildeten Antriebsmotor (2), einem mit einem Achsantrieb (5) in Verbindung stehenden Fahrgetriebe (4) mit veränderlichem Übersetzungsverhältnis, und mit einer im Kraftfluss zwischen dem Antriebsmotor (2) und dem Fahrgetriebe (4) angeordneten automatisierten Motorkupplung (3), die als eine über eine federgestützte Anpressvorrichtung (6) passiv schließbare Reibungskupplung ausgebildet ist, und deren übertragbares Drehmoment (Kupplungsmoment) mittels eines Kupplungs-Stellantriebs (7) einstellbar ist, wobei die federgestützte Anpressvorrichtung (6) auf die Erzeugung eines unterhalb des maximalen Drehmoments des Antriebsmotors (2) liegenden Basis-Kupplungsmomentes ausgelegt ist und zur Einstellung eines höheren Kupplungsmomentes eine zweite, mit dem Kupplungs-Stellantrieb (7) in Wirkverbindung stehende Anpressvorrichtung (17) vorgesehen ist sowie eine über einen steuerbaren Stellantrieb betätigbare Ausrückvorrichtung (18) zur Absenkung des Kupplungsmomentes unter das Basis-Kupplungsmoment und/oder zum vollständigen Öffnen der Motorkupplung (3) vorgesehen ist, und die zweite Anpressvorrichtung (17) und die Ausrückvorrichtung (18) von dem Kupplungs-Stellantrieb (7) gemeinsam betätigbar sind, wobei der gemeinsame Kupplungs-Stellantrieb (7) der zweiten Anpressvorrichtung (17) und der Ausrückvorrichtung (18) einen doppeltwirksamen Stellzylinder (19), einen axialbeweglich in dem Stellzylinder (19) gelagerten Stellkolben (20) und zwei beidseitig des Stellkolbens (20) jeweils von dem Stellzylinder (19) und dem Stellkolben (20) eingeschlossenen Druckräumen (21, 22) umfasst, wobei der erste Druckraum (21) getriebeseitig an den Stellkolben (20) angrenzt und über eine erste Anschlussleitung (23) über eine Kupplungs-Steuereinrichtung (24) mit der Druckmittelquelle (25) verbunden ist, wobei der zweite Druckraum (22) kupplungsseitig an den Stellkolben (20) angrenzt und über eine zweite Anschlussleitung (26) über die Kupplungs-Steuereinrichtung (24) mit der Druckmittelquelle (25) verbunden ist, und wobei der Stellzylinder (19) oder der Stellkolben (20) mit einem Abstützelement (14) der Motorkupplung (3) und das jeweils andere Bauteil (Stellkolben (20) oder Stellzylinder (19)) mit einem Anpresselement (13) der Motorkupplung (3) in Verbindung steht und zur Ansteuerung des gemeinsamen Kupplungs-Stellantriebs (7) eine Kupplungs-Steuereinrichtung (24) vorgesehen ist, bei der im unbetätigten Betriebszustand eine Verbindung der beiden Anschlussleitungen (23, 26) mit der Druckmittelquelle (25) vollständig geschlossen und eine Verbindung der beiden Anschlussleitungen (23, 26) mit einer Drucklosleitung (33) vollständig geöffnet ist, dass im betätigten Betriebszustand zur Erhöhung des Kupplungsmomentes die Verbindung der ersten Anschlussleitung (23) mit der Druckmittelquelle (25) zumindest teilweise geöffnet, die Verbindung der ersten Anschlussleitung (23) mit der Drucklosleitung (33) zumindest teilweise geschlossen, die Verbindung der zweiten Anschlussleitung (26) mit der Druckmittelquelle (25) zumindest teilweise geschlossen, und die Verbindung der zweiten Anschlussleitung (26) mit der Drucklosleitung (33) zumindest teilweise geöffnet ist, und dass im betätigten Betriebszustand zur Verringerung des Kupplungsmomentes die Verbindung der ersten Anschlussleitung (23) mit der Druckmittelquelle (25) zumindest teilweise geschlossen, die Verbindung der ersten Anschlussleitung (23) mit der Drucklosleitung (33) zumindest teilweise geöffnet, die Verbindung der zweiten Anschlussleitung (26) mit der Druckmittelquelle (25) zumindest teilweise geöffnet, und die Verbindung der zweiten Anschlussleitung (26) mit der Drucklosleitung (33) zumindest teilweise geschlossen ist, **dadurch gekennzeichnet, dass** die Kupplungs-Steuereinrichtung (24) zwei 2/2-Wegeventile (40, 41), ein Umschaltventil (42) und einen Drucksensor (43) umfasst, wobei ein erstes 2/2-Wegeventil (40) ausgestattet ist mit einem Anschluss für eine Verbindungsleitung (32) zu der Druckmittelquelle (25) sowie mit einem Anschluss für eine Verbindungsleitung (39) zu dem Umschaltventil (42), wobei das zweite 2/2-Wegeventil (41) ausgestattet ist mit einem Anschluss der Verbindungsleitung (39) zu dem Umschaltventil (42) und einem Anschluss zu der Drucklosleitung (33), und bei dem das Umschaltventil (42) ausgestattet ist mit einem Anschluss für die Verbindungsleitung (39) zu den beiden 2/2-Wegeventilen (40, 41) sowie mit jeweils einem Anschluss für Verbindungsleitungen (23, 26), die zu dem ersten Druckraum (21) beziehungsweise zu dem zweiten Druckraum (22) führen.

2. Antriebsstrang nach Anspruch 1, **dadurch gekennzeichnet, dass** der Drucksensor (43) so angeordnet ist, dass dieser den Druck in der Verbindungsleitung (39) zwischen den beiden 2/2-Wegeventilen (40, 41) und dem Umschaltventil (42) messen kann, und dass dieser Drucksensor (43) mit einer elektronischen Steuerungsvorrichtung verbunden ist, die zur Steuerung der Kupplungs-Steuereinrichtung (24; 40, 41, 42, 43) auch aufgrund der Messwerte des Drucksensors (43) vorhanden ist.

3. Antriebsstrang nach Anspruch 1 oder 2, **dadurch gekennzeichnet, dass** der Kupplungs-Stellantrieb (7) der zweiten Anpressvorrichtung (17) und/oder der Ausrückvorrichtung (18) pneumatisch wirksam ausgebildet und an eine Druckluft-Versorgungseinrichtung (27) des Kraftfahrzeugs anschließbar ist.

4. Antriebsstrang nach Anspruch 1 oder 2, **dadurch gekennzeichnet, dass** der Kupplungs-Stellantrieb (7) der zweiten Anpressvorrichtung (17) und/oder der Ausrückvorrichtung (18) hydraulisch wirksam ausgebildet und an eine Hydraulik-Druckversorgungseinrichtung des Kraftfahrzeugs anschließbar ist.

5. Antriebsstrang nach einem der Ansprüche 1 bis 4, **dadurch gekennzeichnet, dass** das durch die federgestützte Anpressvorrichtung (6) erzeugte Basis-Kupplungsmoment dem Schleppmoment des Antriebsmotors (2) entspricht.

6. Antriebsstrang nach einem der Ansprüche 1 bis 4, **dadurch gekennzeichnet, dass** das durch die federgestützte Anpressvorrichtung (6) erzeugte Basis-Kupplungsmoment dem Leerlaufmoment des Antriebsmotors (2) entspricht.

## Claims

1. Driveline of a motor vehicle with a combustion-type driving engine (2), a final-drive (5)-linked variable-ratio driving transmission (4) and - arranged in the power flow between the driving engine (2) and the driving transmission (4) - an automated engine clutch (3), which is designed as a friction clutch passively locking via a spring-supported pressure device (6) and whose transmissible torque (clutch torque) is settable by means of a clutch actuator (7), with the spring-supported pressure device (6) being designed for the generation of a basic clutch torque below the maximum torque of the driving engine (2), and with a second pressure device (17) - actively connected to the clutch actuator (7) - being provided for the setting of a higher clutch torque, as well as a clutch operator (18) - controllable via a controllable actuator - for pushing the clutch torque below the basic clutch torque and/or for complete opening of the engine clutch (3), with the second pressure device (17) and the clutch operator (18) being jointly controllable by the clutch actuator (7), with the clutch actuator (7) shared by the second pressure device (17) and the clutch operator (18) comprising a double-acting positioning cylinder (19), an axially-moving positioning piston (20) supported in the positioning cylinder (19) and two pressure chambers (21, 22), one on each side of the positioning piston (20), each enclosed by the positioning cylinder (19) and the positioning piston (20), with the transmission-end first enclosed pressure chamber (21) adjoining the positioning piston (20) and being linked to the pressure medium source (25) via a first connection line (23) by means of a clutch controller (24), with the clutch-end second enclosed pressure chamber (22) adjoining the positioning piston (20) and being linked to the pressure medium source (25) via a second connection line (26) by means of the clutch controller (24), and with the positioning cylinder (19) or the positioning piston (20) being connected to a supporting element (14) of the engine clutch (3) and the respective other component - positioning piston (20) or positioning cylinder (19) - being connected to a pressure element (13) of the engine clutch (3), and with a clutch controller (24) being provided for control of the shared clutch actuator (7), with a connection of the two connection lines (23, 26) with the pressure medium source (25) being completely closed and a connection of the two connection lines (23, 26) with an unpressurized line (33) being completely open in the non-actuated operating state of the clutch controller; that for increasing the clutch torque in the actuated operating state, the connection of the first connection line (23) with the pressure medium source (25) is at least partially open, the connection of the first connection line (23) with the unpressurized line (33) is at least partially closed, the connection of the second connection line (26) with the pressure medium source (25) is at least partially closed, and the connection of the second connection line (26) with the unpressurized line (33) is at least partially open; and that for decreasing the clutch torque in the actuated operating state, the connection of the first connection line (23) with the pressure medium source (25) is at least partially closed, the connection of the first connection line (23) with the unpressurized line (33) is at least partially open, the connection of the second connection line (26) with the pressure medium source (25) is at least partially open, and the connection of the second connection line (26) with the unpressurized line (33) is at least partially closed, **characterized in that** the clutch controller (24) comprises two 2/2-way valves (40, 41), one changeover valve (42) and one pressure sensor (43), with a first 2/2-way valve (40) being equipped with a connection for a connection line (32) to the pressure medium source (25) as well as a connection for a connection line (39) to the changeover valve (42), with the second 2/2-way valve (41) being equipped with a connection of the connection line (39) to the changeover valve (42) and a connection to the unpressurized line (33), and with the changeover valve (42) being equipped with a connection for the connection line (39) to the two 2/2- way valves (40, 41) as well as one connection each for the connection lines (23, 26) leading to the first pressure chamber (21) or the second pressure chamber (22).

2. Driveline according to claim 1, **characterized in that** the pressure sensor (43) is arranged in such a manner that it can measure the pressure in the connection line (39) between the two 2/2-way valves (40, 41) and the changeover valve (42) and that this pressure sensor (43) is connected to an electronic control device provided for control of the clutch controller (24; 40, 41, 42, 43) also on the basis of the values measured by the pressure sensor (43).

3. Driveline according to claim 1 or 2, **characterized in that** the clutch actuator (7) of the second pressure device (17) and/or the clutch operator (18) is designed for pneumatic action and can be connected to a compressed-air supply system (27) of the motor vehicle.

4. Driveline according to claim 1 or 2, **characterized in that** the clutch actuator (7) of the second pressure device (17) and/or the clutch operator (18) is designed for hydraulic action and can be connected to a hydraulic pressure supply system of the motor vehicle.

5. Driveline according to one of the claims 1 thru 4, **characterized in that** the basic clutch torque generated by the spring-supported pressure device (6) is equivalent to the drag torque of the driving engine (2).

6. Driveline according to one of the claims 1 thru 4, **characterized in that** the basic clutch torque generated by the spring-supported pressure device (6) is equivalent to the idling torque of the driving engine (2).

## Revendications

1. Chaîne cinématique d'un véhicule automobile, dotée d'un moteur d'entraînement (2) réalisé comme moteur à combustion interne, d'une transmission (4) étant liée à une boîte-pont (5) dont le rapport de démultiplication peut être varié, et d'un embrayage moteur automatisé (3) disposé dans la chaîne cinématique entre le moteur d'entraînement (2) et la transmission (4), cet embrayage moteur étant réalisé comme un embrayage à friction pouvant être engagé passivement par l'intermédiaire d'un dispositif de pression (6) soutenu par ressort, et dont le couple transmissible (couple d'embrayage) peut être réglé à l'aide d'un mécanisme de commande de l'embrayage (7), sachant que le dispositif de pression soutenu par ressort (6) est conçu de manière à pouvoir générer un couple d'embrayage de base étant inférieur au couple maximal du moteur d'entraînement (2) et que pour le réglage d'un couple d'embrayage plus élevé est prévu un deuxième dispositif de pression (17) étant lié activement au mécanisme de commande de l'embrayage (7) et qu'il est prévu un dispositif de débrayage (18) qui peut être actionné par l'intermédiaire d'un mécanisme de commande réglable pour la réduction du couple d'embrayage en-dessous du couple d'embrayage de base et/ou pour l'ouverture complète de l'embrayage moteur (3), et que le deuxième dispositif de pression (17) et le dispositif de débrayage (18) peuvent être actionnés simultanément par le mécanisme de commande de l'embrayage (7), sachant que le dispositif de commande commune de l'embrayage (7) du deuxième dispositif de pression (17) et du dispositif de débrayage (18) comprend un vérin d'actionnement à double effet (19), un piston d'actionnement (20) déplaçable dans le sens axial et logé dans le vérin d'actionnement (19) et deux chambres de pression (21, 22) renfermées des deux côtés du piston d'actionnement (20) respectivement par le vérin d'actionnement (19) et le piston d'actionnement (20), sachant que la première chambre de pression (21) est adjacente du côté de la boîte de vitesses au piston d'actionnement (20) et qu'elle est liée par l'intermédiaire d'une première conduite de raccordement (23) et à l'aide d'un dispositif de commande de l'embrayage (24) à la source du fluide de pression (25), sachant que la deuxième chambre de pression (22) est adjacente du côté embrayage au piston d'actionnement (20) et est liée par l'intermédiaire d'une deuxième conduite de raccordement (26) et à l'aide du dispositif de commande de l'embrayage (24) à la source du fluide de pression (25), et sachant que le vérin d'actionnement (19) ou le piston d'actionnement (20) sont liés à un élément d'appui (14) de l'embrayage moteur (3) et respectivement l'autre élément (piston d'actionnement (20) ou vérin d'actionnement (19)) à un élément de pression (13) de l'embrayage moteur (3) et que pour le pilotage du dispositif de commande commune de l'embrayage (7) est prévu un dispositif de commande de l'embrayage (24), dans lequel, à l'état de fonctionnement non-actionné, une connexion des deux conduites de raccordement (23, 26) avec la source du fluide de pression (25) est complètement fermée et une connexion des deux conduites de raccordement (23, 26) avec une conduite sans pression (33) est complètement ouverte, et sachant que dans l'état de fonctionnement actionné, pour l'augmentation du couple d'embrayage, la connexion de la première conduite de raccordement (23) avec la source du fluide de pression (25) est au moins partiellement ouverte, la connexion de la première conduite de raccordement (23) avec la conduite sans pression (33) est au moins partiellement fermée, la connexion de la deuxième conduite de raccordement (26) avec la source du fluide de pression (25) est au moins partiellement fermée, et la connexion de la deuxième conduite de raccordement (26) avec la conduite sans pression (33) est au moins partiellement ouverte, et qu'à l'état de fonctionnement actionné, pour la réduction du couple d'embrayage, la connexion de la première conduite de raccordement (23) avec la source du fluide de pression (25) est au moins partiellement fermée, la connexion de la première conduite de raccordement (23) avec la conduite sans pression (33) est au moins partiellement ouverte, la connexion de la deuxième conduite de raccordement (26) avec la source du fluide de pression (25) est au moins partiellement ouverte, et la connexion de la deuxième conduite de raccordement (26) avec la conduite sans pression (33) est au moins partiellement fermée, **caractérisée en ce que** le dispositif de commande de l'embrayage (24) comprend deux distributeurs à 2/2 voies (40, 41), une soupape d'inversion (42) et un capteur de pression (43), sachant qu'un premier distributeur à 2/2 voies (40) est doté d'un raccord pour une conduite de raccordement (32) avec la source du fluide de pression (25) ainsi que d'un raccord pour une conduite de raccordement (39) avec la soupape d'inversion (42), sachant que le deuxième distributeur à 2/2 voies (41) est doté d'un raccord de la conduite de raccordement (39) avec la soupape d'inversion (42) et d'un raccord vers la conduite sans pression (33), et dans lequel la soupape d'inversion (42) est dotée d'un raccord pour la conduite de raccordement (39) avec les deux distributeurs à 2/2 voies (40, 41) ainsi que de respectivement un raccord pour les conduites de raccordement (23, 26), menant vers la première chambre de pression (21) ou vers la deuxième chambre de pression (22).

2. Chaîne cinématique selon la revendication 1, **caractérisée en ce que** le capteur de pression (43) est disposé de manière à ce qu'il est capable de mesurer la pression dans la conduite de raccordement (39) entre les deux distributeurs à 2/2 voies (40, 41) et la soupape d'inversion (42), et **en ce que** ce capteur de pression (43) est lié à un dispositif de commande électronique, celui-ci ayant été prévu pour le pilotage du dispositif de commande de l'embrayage (24, 40, 41, 42, 43) et cela aussi sur la base des valeurs mesurées par le capteur de pression (43).

3. Chaîne cinématique selon la revendication 1 ou 2, **caractérisée en ce que** le mécanisme d'actionnement de l'embrayage (7) du deuxième dispositif de pression (17) et/ou du dispositif de débrayage (18) est réalisé de façon à ce qu'il puisse fonctionner pneumatiquement et à ce qu'il puisse être connecté au dispositif d'alimentation en air comprimé (27) du véhicule automobile.

4. Chaîne cinématique selon la revendication 1 ou 2, **caractérisée en ce que** le mécanisme d'actionnement de l'embrayage (7) du deuxième dispositif de pression (17) et/ou du dispositif de débrayage (18) est réalisé de façon à ce qu'il puisse fonctionner hydrauliquement et **en ce qu'**il puisse être connecté un dispositif d'alimentation en pression hydraulique du véhicule automobile.

5. Chaîne cinématique selon une des revendications 1 à 4, **caractérisée en ce que** le couple d'embrayage de base généré par le dispositif de pression soutenu par ressort (6) correspond au couple de traînée du moteur d'entraînement (2).

6. Chaîne cinématique selon une des revendications 1 à 4, **caractérisée en ce que** le couple d'embrayage de base généré par le dispositif de pression soutenu par ressort (6) correspond au couple de ralenti du moteur d'entraînement (2).
